# EUROPEAN PATENT APPLICATION

(11) **EP 0 577 208 A1**
(43) Date of publication of application: **05.01.1994**
(21) Application number: 93201851.8
(22) Date of filing: 25.06.1993
(51) Int. Cl.: C08L 71/12, C08L 77/00, C08L 61/06

(54) **Thermoplastic composition based on polyphenylene ether and polyamide**

(30) Priority: 02.07.1992 IT MI921614
(71) Applicant: ENICHEM S.p.A., I-20124 Milano (IT)
(72) Inventor: Carraro, Claudio, I-30035 Mirano (Venezia) (IT); Moro, Alessandro, I-30030 Cazzago (Venezia) (IT); Pippa, Roberto, I-30033 Noale (Venezia) (IT)
(74) Representative: Fusina, Gerolamo

(57) **Abstract**

A thermoplastic composition comprising:
(C₁) a polyphenylene ether resin;
(C₂) a polyamide;
(C₃) an amount at least sufficient to effect the compatibility of the two resins (C₁) and (C₂) of a phenolic resin having a hydroxyl group or a halogen atom, and optionally
(C₄) a rubbery polymeric modifier.

## Description

The present invention relates to a thermoplastic composition based on a polyphenylene ether and a polyamide.

More in particular, the present invention relates to a composition having a good balance of mechanical and thermal properties, improved impact resistance and a good processability, comprising a polyphenylene ether and a polyamide.

The polyphenylene ether resins (PPE), also known as polyphenylene oxide resins, represent a well known family of engineering polymers characterized by a good combination of thermal, mechanical and dielectrical properties within a wide temperature range. This combination of properties makes the polyphenylene ether resins suitable for use in a wide number of applications by means of injection or extrusion molding techniques.

In spite of these numerous possible commercial applications of the polyphenylene ether resins, their utilization is limited due to their poor processability mainly attributable to the low fluidity in the molten state and to the narrow range of workability which can cause some difficulties during the extrusion and injection molding operations.

A further drawback is that the polyphenylene ether resins show a poor solvent resistance after molding and a low resiliency (IZOD), thus the use thereof for certain applications is further limited.

To improve these shortcomings it has been suggested to blend the polyphenylene ether resins with other polymers which possess the lacking properties.

Thus, for example, U.S. Patent No. 3,379,792 suggests to improve the fluidity of the polyphenylene ether resins by the addition of a polyamide. According to the teachings of this patent, however, the blends are limited to a polyamide concentration up to 25% by weight; in fact a higher amount of polyamide involves delamination and a significant decay of the other physical-mechanical properties such as the resiliency.

It is, in fact, known from the literature that polyphenylene ether resins and polyamide resins are not completely compatible with each other within a wide range of proportions, and that poor properties and phase separation occur especially when the polyamide concentration is rather high.

It is also known from the literature that, for overcoming this drawback, a reactive compound with both the polyphenylene ether resin and the polyamide, generally said compatibilizing agent, is added to the mixture.

Thus, according to U.S. Patent No. 4,315,086 and the corresponding European Patent No. 0,024,120, compositions comprising polyphenylene ether and a polyamide, showing satisfactoring resilience characteristics and excellent processability, may be prepared by mixing the two polymers in the molten state with from 0.01 to 30% by weight of a compound selected from the group consisting of:
a) a liquid diene polymer;
b) an epoxy compound, and
c) a compound wherein both (i) an ethylenic double bond C=C or a triple bond C=C, and (ii) a carboxy, anhydride, amido, imido, carboxylic ester, amino or hydroxy group are present in the molecule.

Japanese published Patent Application No. 84/66452 describes polymeric compositions similar to the preceding ones prepared by using a polyphenylene ether which has been pretreated with one of the above reported olefinic compounds a) to c), in the presence of a free radical initiator. However, the resulting compositions do not exhibit an excellent balance of properties and a continous interest exists for producing compositions of the above type showing improved mechanical properties and a combination of properties.

Tests carried out by the Applicant have now found a particular class of compatibilizing agents which allow to substantially improve the mechanical and thermal properties, the processability and/or the chemical resistance of the blends based on a polyphenylene ether and a polyamide.

Such a class of compatibilizing agents is represented by a phenolic resin having general formula (I): 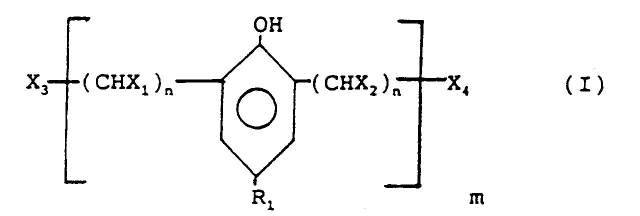
wherein:
- R₁: represents a hydrogen atom, a halogen or a hydrocarbon radical containing from 1 to 18 carbon atoms;
- X₃ and X₄: are, independently from each other, a hydroxyl group, a hydrogen atom or a halogen atom such as chlorine, bromine, iodine and fluorine;
- X₁ and X₂: are, independently from each other, a hydrogen atom, an alkyl radical containing from 1 to 6 carbon atoms or a halogen atom such as chlorine, bromine, iodine and fluorine;
provided that at least one of the X₁, X₂, X₃, and X₄ radicals be a hydroxyl group or a halogen atom;
- n: is an integer ranging from 1 to 6; and
- m: is an integer ranging from 1 to 6.

Examples of "R₁" hydrocarbon radicals are: an alkyl radical or a substituted alkyl radical such as methyl, ethyl, n- and iso-propyl, n- and tert- butyl, n-amyl, n-hexyl, n-octyl, n-dodecenyl, n-octadecenyl, chloroethyl, hydroxyethyl, phenylethyl, hydroxymethyl carboxymethyl, methoxy-carbonyl-ethyl, cyanoethyl, and so on; an aryl radical or a substituted aryl radical such as phenyl, chlorophenyl, bromophenyl, methylphenyl, dimethylphenyl, ethylphenyl, and so on; a benzyl radical or an allyl radical.

Subject matter of the present invention is, therefore, a thermoplastic composition having an excellent balance of mechanical, physical and thermal properties and chemical resistance as well as a good flowability in the molten state, comprising:
(C₁) a polyphenylene ether resin;
(C₂) a polyamide, and
(C₃) a phenolic resin, containing at least one hydroxyl group or a halogen atom, of the above reported formula (I).

The thermoplastic composition of the present invention can further include a rubbery polymeric modifier (C₄) when particularly high IZOD resilience properties (impact resistance) are required.

In the composition of the present invention, the proportions of the polyphenylene ether (C₁) and of the polyamide (C₂) can vary within a wide range. Generally, the polyphenylene ether is present in an amount ranging from 5 to 95% by weight and, correspondingly, the polyamide is present in an amount ranging from 95 to 5% by weight, with respect to the total weight of the two resins (C₁) + (C₂).

A preferred composition comprises from 25 to 75% by weight of polyphenylene ether (C₁) and, correspondingly, from 75 to 25% by weight of polyamide (C₂).

The compatibilizing agent (C₃) of formula (I) is present in an amount at least sufficient to effect the compatibility of the two resinous components (C₁) and (C₂). The expression "compatibility" is intended to encompass an adequate dispersion of the two resins in a manner which provides useful thermoplastic compositions having acceptable properties without any delamination.

Typically, at least 0.01 parts by weight of the compatibilizing agent (C₃) of formula (I) will be necessary per 100 parts by weight of (C₁) and (C₂) components.

Preferred compositions are those containing approximately from 0.1 to about 10 parts by weight of the compatibilizing agent (C₃) per 100 parts by weighs of the two (C₁) and (C₂) resins.

The amount of the rubbery polymeric modifier (C₄) can range from 0 to 100 parts by weight, with respect to 100 parts by weight of the two (C₁) and (C₂) resins; amounts comprised between 0.1 and 50 parts by weight are preferred.

Therefore, a preferred composition of the present invention comprises:
- 100 parts by weight of a mixture consisting of:
   - 25-75% by weight of a polyphenylene ether (C₁), and
   - 75-25% by weight of a polyamide (C₂);
- from 0.01 to 10 parts by weight of a phenolic resin (C₃) having the above reported general formula (I), and
- from 0.1 to 50 parts by weight of a rubbery polymeric modifier (C₄).

Phenolic resins particularly suitable for the compositions of the present invention are those having the above reported formula (I) wherein R₁ is an alkyl radical containing from 5 to 10 carbon atoms, each of X₁ and X₂ is hydrogen atom, each of X₃ and X₄ is a hydroxyl group or a bromine atom, n is 1 and m is an integer comprised between 4 and 8.

These phenolic resins can be prepared by polycondensation of a hydrocarbo-substituted phenol with an aldehyde, preferably formaldehyde, in an alkaline medium or by polycondensation of bifunctional phenoldialcohols, such as 2,6-dimethylol-4-hydrocarbo-substituted phenols. The preparation of these phenolic resins is described, for example, in U.S. Patent Nos. 2,972,600 and 3,093,613.

Suitable phenolic resins and brominated phenolic resins are commercially available under the trade names SP-1045, SP-1055, SP-1056, CRJ-352 from Schenectady Chemicals Inc. Similar functionally equivalent phenolic resins of formula (I) may be obtained from other suppliers.

The polyphenylene ether (C₁) used in the compositions of the present invention is a well known polymer or copolymer broadly utilized in the industry, especially as engineering polymer, in appliances which require toughness and thermal stability.

These polyphenylene ether resins are polymers and copolymers which comprise a plurality of structural units having the following formula (II): 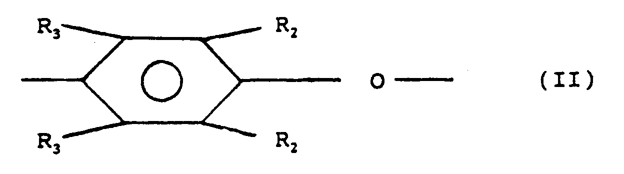
wherein:
each R₂ is independently a halogen atom, a primary or secondary alkyl radical containing from 1 to 7 carbon atoms, a substituted alkyl radical, phenyl, substituted phenyl, a C₁ - C₇ alkyloxy radical, or a haloalkyloxy wherein at least two carbon atoms separate the halogen and oxygen atoms;
each R₃ is independently hydrogen, a halogen atom, a primary or secondary alkyl radical containing from 1 to 7 carbon atoms, a substituted alkyl radical, phenyl, substituted phenyl, a C₁ - C7 alkyloxy radical, or a haloalkyloxy as defined for R₂.

Examples of R₂ and R₃ include: hydrogen, a halogen such as chlorine, bromine or fluorine, an alkyl radical or a substituted alkyl radical such as methyl, ethyl, n- and iso-propyl, n-, sec-, iso- and tert- butyl, n-amyl, n-hexyl, 2,3-dimethylbutyl, chloro-ethyl, hydroxyethyl, phenylethyl, hydroxymethyl, carboxy-ethyl, methoxycarbonylethyl, cyanoethyl; aryl or substituted aryl radical such as phenyl, chlorophenyl, methylphenyl, dimethylphenyl, ethylphenyl; a benzyl radical or an allyl radical.

Polyphenylene ethers preferred in the present invention are those having the formula (III): 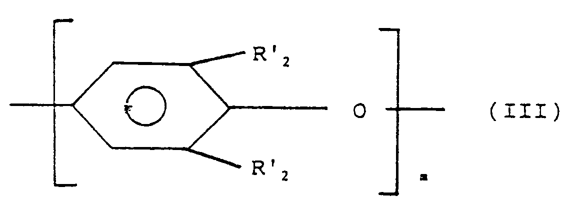
wherein R'₂ independently are an alkyl radical containing from 1 to 4 carbon atoms and m is at least 50 and preferably comprised between 60 and 600.

Illustrative examples of polyphenylene ethers which are particularly suitable for the present invention are:
- poly(2,6-dimethyl-1,4-phenylene)ether;
- poly(2,6-diethyl-1,4-phenylene)ether;
- poly(2-methyl-6-ethyl-1,4-phenylene)ether;
- poly(2,6-dipropyl-1,4-phenylene)ether;
- poly(2-ethyl-6-propyl-1,4-phenylene)ether and the like;
poly(2,6-dimethyl-1,4-phenylene)ether is the most preferred.

The term polyphenylene ether (C₁), whenever used in the present specification and in the claims, includes both the homopolymers and the copolymers containing the structural units of formula (II) indicated hereinbefore, such as, for example, the copolymers comprising units deriving from 2,6-dimethylphenol and 2,3,6-trimethylphenol; as well as the grafted copolymers prepared by grafting one or more vinyl monomers such as acrylonitrile or vinylaromatic compounds such as styrene or polymers such as polystyrene or elastomers onto the polyphenylene ether chain.

The polyphenylene ethers generally have an average molecular weight (determined by gel permeation chromatography) ranging from 5,000 to 120,000, and their inherent viscosity is higher than 0.1 dl/g and preferably ranges from 0.30 to 0.90 dl/g, measured in chloroform at 23°C.

These polyphenylene ethers can be produced by oxidation of a phenol compound with oxygen or an oxygen-containing gas, preferably in the presence of a catalyst for the oxidative coupling, as described in U.S. Patent Nos. 3,226,361; 3,234,183; 3,306,874; 3,306,875; 3,257,357; 3,257,358; 3,337,501; 3,787,361; 3,956,242; 3,962,181; 3,965,069; 4,075,174; 4,093,595-598; 4,102,865; 4,184,034; 4,385,168; etc.

The polyamides (C₂) which are suited for the preparation of the compositions of the present invention can be prepared by polymerization of monoamino-monocarboxilic acids or the corresponding lactams having at least two carbon atoms between the amino group and the carboxilic group; or by polymerization of substantially equimolar amounts of a diamine, which contains at least two carbon atoms between the amino groups, and a bicarboxilic acid; or still by polymerization of a monoamino-monocarboxylic acid or a lactam thereof, as above defined, along with substantially equimolar amounts of a diamine and of a dicarboxilic acid. The dicarboxilic acid can be utilized in the form of a derivative thereof such as, for example, an ester or an acid chloride.

The term "substantially equimolar" is used to designate both strictly equimolar amounts and little deviations therefrom, as it is required by the conventional techniques in order to stabilize the viscosity of the resulting polyamides.

Examples of monoamino-monocarboxylic acids or lactams thereof, which can be utilized for preparing the polyamides, comprise the compounds containing from 2 to 16 carbon atoms between the aminic group and the carboxylic group, said carbon atoms forming a ring including the -CO-NH- group in the case of lactams. Typical examples of monoamino-monocarboxylic acids and lactams are: omega-aminocaproic acid, butyrolactam, pivalolactam, caprolactam, capryl-lactam, enentolactam, undecanolactam, dodecanolactam, 3- and 4-amino-benzoic acid, etc.

Diamines which are suitable for being utilized in the preparation of the polyamides comprise alkyldiamines having a straight or branched chain, aryldiamines and alkyl-aryl-diamines.

Examples of diamines are the ones having the following general formula (IV):

H₂N - (CH₂)ₚ - NH₂ (IV)

wherein p is an integer ranging from 2 to 16, such as trimethylene diamine, tetramethylene diamine, pentamethylene diamine, octamethylene diamine and, particularly, hexamethylene diamine, as well as trimethyl hexamethylene diammine, meta-phenylene diamine, meta-xylilene diamine and the like.

The dicarboxylic acids can be either aliphatic or aromatic. Among the aromatic acids, isophthalic acid and terephthalic acid are to be cited.

The preferred acids are those having the following general formula (V):

HOOC - R₄ - COOH (V)

wherein R₄ is a divalent aliphatic group containing at least 2 carbon atoms and, preferably, from 2 to 18 carbon atoms, such as e.g. sebacic acid, octadecandioic acid, suberic acid, glutaric acid, pimelic acid and adipic acid.

Typical examples of polyamides or nylons, as usually are called are: nylon 6; nylon 6,6; nylon 11; nylon 12; nylon 4,6; nylon 6,10; nylon 6,12.

Partially aromatic polyamides too can be utilized in the compositions of the present invention. The term "partially aromatic polyamides" means those polyamides which are obtained by substituting, in part or in whole, an aliphatic residue of an aliphatic nylon with an aromatic residue.

For example, the polyamides resulting from terephthalic and/or isophthalic acid and trimethyl-hexamethylenediamine; from adipic acid and meta-xylilene diamine, from adipic acid or azelaic acid and 2,2-bis-(p-aminocyclohexyl)propane, or from terephthalic acid and 4,4'-diamino-dicyclohexyl-methane.

Mixtures and/or copolymers of two or more of the above polyamides or of prepolymers thereof can be used as well.

Preferred polyamides are nylon 6, nylon 6,6, nylon 11 and nylon 12; more particularly, nylon 6 and nylon 6,6.

The average molecular weight of the polyamides is advantageously higher than 4,000, and preferably comprised between 10,000 and up to 50,000, and the melting point thereof is preferably higher than 200°C.

The term polyamide (C₂), whenever used in the present specification and in the claims, also comprises the block polyamides of the type (A-B)_{z} and (A-B-A)_{z}, wherein A is a polyamide block and B is a polyalkylene glycol block and z is an integer such that the average ponderal molecular weight is comprised between 4,300 and 50,000, preferably between 8,500 and 30,000; as well as the resilient or super-resilient polyamides obtained by blending the conventional polyamides with an elastomeric polymer or copolymer.

These resilient or super resilient polyamides are well known on the market and described, for example, in U.S. Patent Nos. 4,174,358; 4,474,927; 4,346,194; 4,251,644, the contents of which is integral part of the present description as reference.

The thermoplastic compositions of the present invention can also contain a rubbery polymeric modifier (C₄) in order to further improve the physical properties, particularly the resilience or the impact resistance and the processability of the compositions. These modifiers are well known in the art and typically derive from one or more monomers selected from the group consisting of olefins, vinyl aromatic monomers, acrylic acids or alkylacrylic acids and their ester derivatives as well as conjugated dienes.

Suitable modifiers are rubbery high-molecular weight materials including natural and synthetic polymeric materials showing elasticity at room temperature. These modifiers can be homopolymer and copolymer, including random copolymers, block copolymers, radial block copolymers, grafted copolymers and core-shell copolymers as well as combinations thereof.

Specific examples of polymeric modifiers include: high density polyethylene, medium density polyethylene and low density polyethylene, linear low density polyethylene, polypropylene, poly(1-butene), propylene-ethylene copolymers, copolymers of ethylene with other copolymerizable monomers such as vinyl acetate, acrylic acid or methacrylic acid as well as the ester derivatives thereof; ionomer resins containing side carboxylic groups which can be wholly or partially neutralized with metal ions; the styrenic resins described in U.S. Patent 3,383,435; the vinyl aromatic monomer-hydrogenated, partially hydrogenated or not-hydrogenated conjugated diene block polymers, including SB and SBS type block polymers, such as polystyrene-polybutadiene, polystyrene-polyisoprene, polystyrene-polybutadiene-polystyrene and so on; the polystyrene-ethylene-propylene rubbery block polymers (SPE), polybutadiene, butadiene-styrene copolymers poly(chlorobutadiene), ethylene-propylene-diene monomer (EPDM), or the core-shell graft copolymers having the core constituted by a conjugated diene or a cross-linked acrylic rubber and one or more shells polymerized thereon and derived from a vinyl aromatic monomer and/or acrylic monomer alone or in combination with other vinyl monomers.

Particularly interesting and advantageous results are achieved when the modifier (C₄) is a vinyl aromatic-hydrogenated conjugated diene block polymer of SB type, wherein S is a block of vinyl aromatic polymer and B is a block of hydrogenated conjugated diene polymer. Both the S and B blocks may be homopolymers or random copolymer blocks provided that each block predominantes (more than 50%) in at least one class of the monomers characterizing the block, and as long as S blocks individually predominate in the vinyl aromatic compound and the B blocks predominate in the conjugated diene compound.

The term "vinyl aromatic compound", whenever used in the present specification and in the claims, is intended to include styrene and its analogs and homologs, including alpha-methylstyrene, para-methylstyrene and ring-substituted styrene, particularly ring-methylated styrene. The preferred vinyl aromatic cmpounds for the preparation of the block copolymers are styrene and alpha-methylstyrene; styrene is especiaaly preferred.

The term "conjugated diene", whenever used in the present specification and in the claims, is used in its conventional sense and includes, for example, 1,2-butadiene, 1,3-pentadiene, 2,3-dimethyl-1,3-butadiene, 2-methyl-1,3-butadiene (isoprene), to name those most commonly available.

Methods for the preparation of the block polymers are well known in the art. Lithium based catalysts, and especially lithium alkyls, may be employed for the preparation of precursor block copolymers. U.S. Patent No. 3,593,942 describes the preparation of a butyl lithium catalyst and its use to prepare diblock copolymers of isoprene and styrene. After the diblock copolymer has been prepared by this or any other conventional procedure, it is hydrogenated to reduce the unsaturations in accordance with conventional techniques. U.S. Patent No. 3,593,942 describes a suitable method for the selective hydrogenation of block copolymers carried out in the presence of a hydrogenation catalyst, for example the reaction product of an aluminum alkyl, such as tri-ethyl aluminum, with nickel or cobalt carboxylates or alkoxides, at elevated temperatures (35-160°C).

In these conditions, a substantially complete (at least 80%) hydrogenation of the aliphatic double bond, namely of the diene double bond of the B block, is achieved; while the hydrogenation of the aromatic alkenyl double bond of the S block is very reduced (no more than 25%). By the hydrogenation of the polystyrene-polyisoprene block polymer a polystyrene-(ethylene-propylene copolymer) block polymer is obtained.

In the typical case, block S can have an average molecular weight comprised between 8,000 and 60,000 and block B can have an average molecular weight comprised between 50,000 and 200,000. Block S can vary between 8 and 85 parts by weight, based on 100 parts of blocks S and B together.

A suitable, and especially favored, commercial block polymer for being used in the composition of the present invention is that supplied from the Shell Oil Company, under the trade designation KRATON^{R} which is a styrene-ethylene-propylene block copolymer with a styrene/ethylene-propylene weight ratio 37/63.

In addition to components (C₁), (C₂), (C₃) and optionally (C₄), the compositions of the present invention can also contain reinforcing additives such as for example glass fibres, carbon fibres, organic and inorganic high-modulus fibres, metal fibres, inorganic fillers, etc., as well as antiflame agents, dyestuffs, pigments, stabilizers, lubricants, etc., which are well-known to those skilled in the art.

The reinforcing additives can be used in amounts generally not exceeding 50% by weight and, preferably, not higher than 30% by weight calculated on the total composition.

Particularly preferred reinforcing additives are the glass fibres, which can be untreated or, better, treated with silanes or titanates, as it is well-known to the technicians and to the manufacturers of said fibres.

Suitable stabilizers to be used in the compositions of the present invention comprise many of the known thermal stabilizers and antioxidants suitable and generally utilized for the specific engineering polymer, the polyphenylene ether resins or the polymeric modifiers. For example, liquid phosphates and hindered phenols can be added to the compositions of the present invention, in amounts which can range from 0.05 to 5% by weight.

The mixtures subject matter of the present invention can be prepared by any conventional mixing method. For example, the mixing can be carried out in the molten state and time and temperature are selected and determined time-to-time as a function of the composition. The temperatures are generally in the range of from 200 to 300°C.

Any known mixing unit can be utilized. The method can be continuous or discontinuous. Specifically, single-screw and two-screw extruders, Banbury type inner mixers, mixing rollers and the like can be used.

Although all the composition components can be introduced at the beginning and directly into the mixing unit, in some cases it is preferable to pre-mix one of the two resins, preferably polyphenylene ether, with the diblock polymer, before the mixing with the other resin.

The compositions subject matter of the present invention are easily processable by injection molding or by extrusion and exhibit a complex of properties which make them suited to be utilized for the manufacture of shaped articles having a high impact strength along with a good thermal stability and a low water sensitivity. Thanks to these properties, the compositions of the present invention find the use in the automotive sector, for the manufacture of articles which can be furnace-painted, parts which enter into contact with motors, houshold electric apparatuses, electronic articles and technical articles in general in the form of cups, boxes, containers, panels, sheets, rods, etc.

In order to better understand the present invention and to reduce it to practice, a few illustrative examples are given hereinafter, which however are not limitative of the scope of the invention.

In the examples, for measuring the characteristics of the produced thermoplastic compositions, the following methods were used:

### Mechanical properties

The IZOD resilience with notch was determined at 23°C, according to ASTM D 256, on test samples having a thickness of 3.2 mm.

### Thermal properties

The VICAT softening temperatures at 1 Kg and at 5 kg in oil were determined, according to ISO 306.

### Rheological properties

The Melt Flow Index (M.F.I.) was determined according to ASTM D 1238, at 270°C and 10 kg.

### EXAMPLE 1

### Preparation of the composition

Into a HAAKE plastograph, equipped with a 50 ml cell and heated at 240 °C, there was introduced a mixture, prepared at room temperature, consisting of:
- 70% by weight of poly(2,6-dimethyl-1,4-phenylene)ether,
- 30% by weight of the elastomer KRATON^{R} G 1701.

The plastograph mastication speed was programmed according to a cycle of 50-120-50 r.p.m. and the residence time was 9 minutes.

The mixture leaving the first plastograph was fed to a second plastograph of the same type of the first one together with nylon 6 and SP 1045 phenolic resin in the following proportions:
- 33.3% by weight of the mixture leaving the first plastograph consisting of 70% of poly(2,6-dimethyl-1,4-phenylen)ether and 30% of Kraton G 1701;
- 41% by weight of nylon 6 produced by the firm EniChem S.r.l. under the tradename "TERNIL^{R} B 27", having an average molecular weight of 18,000, and
- 25.7% by weight of poly(2,6,-dimethyl-1,4-phenylene) ether,
- 0.5 parts per 100 parts by weight of the first three components of SP 1045 phenolic resin.

The operative conditions were the same of the first plastograph.

The resulting mixture was ground, compression molded at 260 °C and characterized.

The characteristics of the thus obtained mixture are listed in Table I.

### EXAMPLES 2 and 3

The operative conditions of example 1 were repeated by varying only the amount of SP 1045 resin which was changed to 1.0 and 2.5, respectively, parts per 100 parts by weight of poly(2,6-di-methyl-1,4-phenylen)ether, polyamide and elastomer.

The characteristics of the thus obtained mixtures are listed in Table I.

### EXAMPLE 4 (comparison)

The operative conditions of example 1 was repeated by omitting the addition of SP 1045 resin.

The characteristics of the thus obtained mixtures are listed in Table I.

**TABLE I**

| CHARACTERISTICS UNITS | IZOD J/m | VICAT at 1Kg °C | VICAT at 5Kg °C | M.F.I. g/10' |
|---|---|---|---|---|
| EXAMPLE 1 | 140 | 204 | 179 | 33,4 |
| EXAMPLE 2 | 227 | 200 | 180 | 32,7 |
| EXAMPLE 3 | 117 | 202 | 179 | 13,7 |
| EXAMPLE 4* | 70 | 200 | 183 | 12,0 |

| | | | | |
|---|---|---|---|---|
| * Comparison Example | | | | |

### EXAMPLE 5

### Preparation of the composition

Into a HAAKE plastograph, equipped with a 50 ml cell and heated at 240 °C, there was introduced a mixture, prepared at room temperature, consisting of:
- 49% by weight of poly(2,6-dimethyl-1,4-phenylene)ether having an inherent viscosity of 0.51 dl/gr (in cholorophorm at 23°C;
- 41% by weight of nylon 6 produced by the firm EniChem S.r.l. under the tradename "TERNIL^{R} B 27", having an average molecular weight of 18,000,
- 10% by weight of KRATON^{R} G 1701;
- 1.0 part by weight of SP 1045 resin.

The plastograph mastication speed was programmed according to a cycle of 50-120-50 r.p.m. and the residence time of the mixture into the plastograph was 9 minutes.

The characteristics of the thus obtained mixture are listed in Table II.

### EXAMPLES 6 and 7

The operative conditions of example 6 were repeated by varying only the amount of SP 1045 resin which was changed to 2.5 and 5.0, respectively, parts per 100 parts by weight of poly(2,6-di-methyl-1,4-phenylen)ether, polyamide and elastomer.

The characteristics of the thus obtained mixtures are listed in Table II.

### EXAMPLE 8 (comparison)

The operative conditions of example 6 was repeated by omitting the addition of SP 1045 resin.

The characteristics of the thus obtained mixtures are listed in Table II.

**TABLE II**

| CHARACTERISTICS UNITS | IZOD J/m | VICAT at 1Kg °C | VICAT at 5Kg °C | M.F.I. g/10' |
|---|---|---|---|---|
| EXAMPLE 6 | 323 | 203 | 181 | 19,9 |
| EXAMPLE 7 | 200 | 207 | 182 | 16,5 |
| EXAMPLE 8 | 149 | 200 | 182 | 23,3 |
| EXAMPLE 9* | 43 | 202 | 183 | 18,7 |

| | | | | |
|---|---|---|---|---|
| * Comparison Example | | | | |

## Claims

1. A thermoplastic composition comprising:
(C₁) a polyphenylene ether resin;
(C₂) a polyamide, and
(C₃) an amount at least sufficient to effect the compatibility of the two resins (C₁) and (C₂) of a phenolic resin having general formula (I): 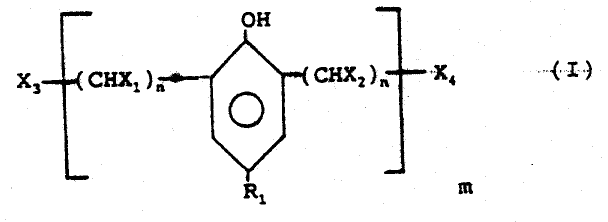 wherein:
R₁ represents a hydrogen atom, a halogen or a hydrocarbon radical containing from 1 to 18 carbon atoms;
X₃ and X₄ are, independently from each other, a hydroxyl group, a hydrogen atom or a halogen atom such as chlorine, bromine, iodine and fluorine;
X₁ and X₂ are, independently from each other, a hydrogen atom, an alkyl radical containing from 1 to 6 carbon atoms or a halogen atom such as chlorine, bromine, iodine and fluorine;
provided that at least one of the X₁, X₂, X₃, and X₄ radicals be a hydroxyl group or a halogen atom;
n is an integer ranging from 1 to 6; and
m is an integer ranging from 1 to 6, and optionally
(C₄) a rubbery polymeric modifier.

2. The thermoplastic composition according to claim 1, wherein in the phenolic resin of formula (I) R₁ is an alkyl radical or a substituted alkyl radical, an aryl radical, a substituted aryl radical, a benzyl radical or an allyl radical.

3. The thermoplastic composition according to claim 1 or 2, wherein in the phenolic reSin of formula (I) R₁ is an alkyl radical containing from 5 to 10 carbon atoms, each of X₁ and X₂ is hydrogen atom, each of X₃ and X₄ is a hydroxyl group or a bromine atom, n is 1 and m is an integer comprised between 4 and 8.

4. The thermoplastic composition according to anyone of the preceding claims, wherein the amount of the polyphenylene ether (C₁) ranges from 5 to 95% by weight, the amount of the polyamide ranges from 95 to 5% by weight, with respect to the total weight of both the resins (C₁) + (C₂), and the amount of the phenolic resin (C₃) of formula (I) is at least 0.01 parts by weight with respect to 100 parts by weight of the two resins (C₁) and (C₂).

5. The thermoplastic composition according to anyone of the preceding claims, wherein the amount of phenolic resin (C₃) of formula (I) ranges from 0.1 to 10 parts by weight with respect to 100 parts by weight of the two (C₁) and (C₂) resins.

6. The thermoplatic composition according to anyone of the preceding claims, wherein the amount of the polymeric modifier (C₄) is comprised between 0 and 100 parts by weight with respect to 100 parts by weight of the two resins (C₁) and (C₂).

7. The thermoplastic composition according to anyone of the preceding claims, characterized in that it comprises:
- 100 parts by weight of a mixture constituted by:
25-75% by weight of a polyphenylene ether (C₁), and
75-25% by weight of a polyamide (C₂);
- from 0.01 to 10 parts by weight of a phenolic resin (C₃) having the above reported formula (I), and
- from 0.1 to 50 parts by weight of a rubbery polymeric modifier (C₄).

8. The thermoplastic composition according to anyone of the preceding claims, wherein the polyphenylene ether is a polymer or a copolymer containing a plurality of structural units of formula: 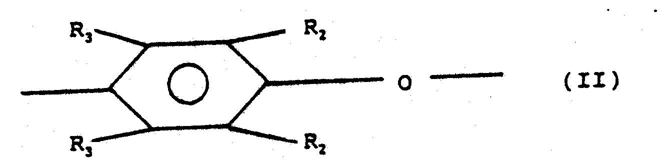 wherein:
each R₂ is independently a halogen atom, a primary or secondary alkyl radical containing from 1 to 7 carbon atoms, a substituted alkyl radical, phenyl, substituted phenyl, a C₁ - C₇ alkyloxy radical, or a haloalkyloxy wherein at least two carbon atoms separate the halogen and oxygen atoms;
each R₃ is independently hydrogen, a halogen atom, a primary or secondary alkyl radical containing from 1 to 7 carbon atoms, a substituted alkyl radical, phenyl, substituted phenyl, a C₁ - C7 alkyloxy radical, or a haloalkyloxy as defined for R₂.

9. The thermoplastic composition according to claim 8, wherein the polyphenylene ether has the general formula: 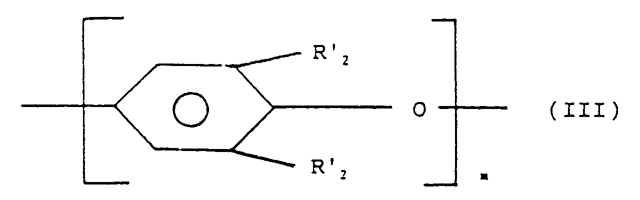 wherein R'₂, independently from each other, is an alkyl radical containing from 1 to 4 carbon atoms and "n" is at least 50 and preferably comprised between 60 and about 600.

10. The thermoplastic composition according to anyone of the preceding claims, wherein the polyphenylene ether is poly(2,6-dimethyl-1,4-phenylene)ether having a number average molecular weight (determined by gel permeation chromatography) ranging from 5,000 to 120,000 and an inherent viscosity higher than 0.1 dl/g and, preferably comprised between 0.30 and 0.90 dl/g, measured in chloroform at 23°C.

11. The thermoplastic composition according to anyone of the preceding claims, wherein the polyamide (C₂) is nylon 6 or nylon 6,6 having an average molecular weight higher than 4,000, and preferably ranging from 15,000 and up to 50,000.

12. The thermoplastic composition according to anyone of the preceding claims, wherein the rubbery polymeric modifier (C₄) is selected from the group consisting of high density polyethylene, medium density polyethylene and low density polyethylene, polypropylene, poly(1-butene), propylene-ethylene copolymers, copolymers of ethylene with other copolymerizable monomers, ionomer resins, styrenic resins, vinyl aromatic monomer-hydrogenated, partially hydrogenated or not-hydrogenated conjugated diene block polymers of the type SB and SBS, the polystyrene-ethylene-propylene rubbery block polymers (SPE), polybutadiene, ethylene-propylene-diene monomer (EPDM), or the core-shell graft copolymers having the core constituted by a conjugated diene or a cross-linked acrylic rubber and one or more shells polymerized thereon and derived from a vinyl aromatic monomer and/or acrylic monomer alone or in combination with other vinyl monomers.

13. The thermoplastic composition according to claim 12, wherein the rubbery polymeric modifier (C₄) is a vinyl aromatic-hydrogenated conjugated diene block polymer of SB type, wherein S is a block of vinyl aromatic polymer and B is a block of hydrogenated conjugated diene polymer.

14. The thermoplastic composition according to claim 13, wherein block S has an average molecular weight comprised between 8,000 and 60,000 and block B has an average molecular weight comprised between 50,000 and 200,000 and block S varies between 8 and 85 parts by weight, based on 100 parts of blocks S and B together.

15. The thermoplastic composition according to anyone of the preceding claims, containing in addition reinforcing additives, inorganic fillers, antiflame agents, dyestuffs, pigments, stabilizers, and/or lubricants.

16. The thermoplastic composition according to claim 15, wherein the amount of the reinforcing additive not exceeds 50% by weight calculated on the total composition.

17. The thermoplastic composition according to claim 15 or 16, wherein the reinforcing additive is glass fibres treated with silanes or titanates.

18. The thermoplastic composition according to claim 15, wherein the amount of the stabilizer ranges from 0.05 to 5% by weight with respect to the composition.
